Europäisches Patentamt

European Patent Office

Office européen des brevets

(11) Numéro de publication: **0 494 558 A1**

## DEMANDE DE BREVET EUROPEEN

(21) Numéro de dépôt: **91403444.2**

(22) Date de dépôt: **18.12.91**

(51) Int. Cl.5: **B23K 26/14**

(30) Priorité: **11.01.91 FR 9100301**

(43) Date de publication de la demande:
**15.07.92 Bulletin 92/29**

(84) Etats contractants désignés:
**DE GB IT**

(71) Demandeur: **FRAMATOME**
**Tour Fiat 1, Place de la Coupole**
**F-92400 Courbevoie(FR)**

(72) Inventeur: **Duny, Pierre Guy**
**17, Rue de Marseille**
**F-71200 Le Creusot(FR)**

(74) Mandataire: **Jacobson, Claude et al**
**Cabinet Lavoix 2, Place d'Estienne d'Orves**
**F-75441 Paris Cedex 09(FR)**

(54) **Procédé et tête de travail au laser.**

(57) Une partie du gaz de protection du soudage est envoyée à travers des passages (17) qui traversent un bloc de cuivre (16) monté dans la tête de travail (1) au-delà du miroir de renvoi (8).

Application au manchonnage par soudage au laser des tubes des générateurs de vapeur des centrales électronucléaires.

EP 0 494 558 A1

La présente invention est relative au travail au laser. Elle s'applique en particulier au travail au laser dans des tubes de petit diamètre, par exemple au soudage au laser de manchettes de réparation dans des tubes d'un générateur de vapeur d'un réacteur nucléaire à eau pressurisée.

Il a déjà été proposé de réaliser des soudures circulaires dans des tubes de petit diamètre en transportant un faisceau laser dans une tête de travail positionnée dans le tube et en focalisant ce faisceau sur le point de travail après passage à travers une série de lentilles et renvoi par un miroir incliné à 45°.

L'une des difficultés que l'on rencontre dans cette technique consiste à obtenir une focalisation précise du faisceau sur le point de travail malgré l'important échauffement de la tête de travail au voisinage du miroir de renvoi.

L'invention a pour but d'augmenter la précision du procédé de façon simple et économique.

A cet effet, l'invention a pour objet un procédé de travail au laser, du type dans lequel un faisceau laser est transporté à l'intérieur d'une tête de travail, renvoyé par un miroir incliné monté dans celle-ci et focalisé sur un point de travail, et un gaz est envoyé dans la région de la tête de travail qui contient le miroir, caractérisé en ce qu'on fait passer une partie du gaz à travers des passages ménagés dans une pièce massive thermiquement conductrice montée au-delà du miroir, en contact thermique avec uniquement l'enveloppe de la tête de travail et espacée du support du miroir.

De préférence, entre deux phases de travail, on continue à faire passer du gaz à travers les passages de la pièce massive.

L'invention a également pour objet une tête de travail au laser destinée à la mise en oeuvre d'un tel procédé. Cette tête de travail, du type comprenant une enveloppe dans laquelle est monté un système optique de transport, de focalisation et de renvoi d'un faisceau laser comportant un miroir incliné, est caractérisée en ce qu'elle comprend une pièce massive thermiquement conductrice montée dans l'enveloppe au-delà du miroir, en contact thermique avec uniquement cette enveloppe et espacée du support du miroir, cette pièce étant pourvue de passages qui communiquent avec l'espace de l'enveloppe situé en-deçà du miroir.

Suivant d'autres caractéristiques de la tête de travail :

- lesdits passages sont ménagés longitudinalement dans la pièce massive;
- la pièce massive est en un matériau meilleur conducteur thermique que celui de l'enveloppe, notamment en cuivre.

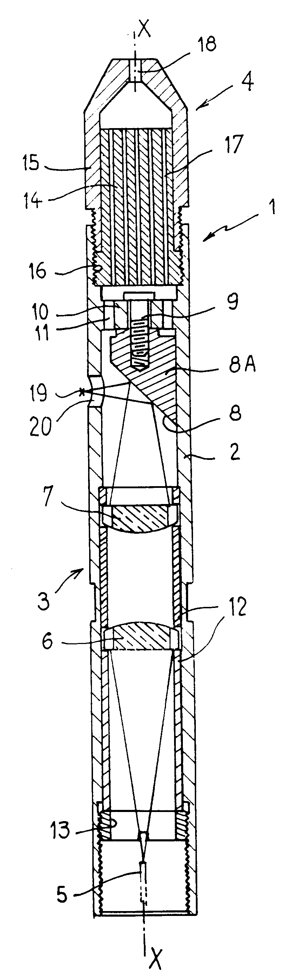

Un exemple de mise en oeuvre de l'invention va maintenant être décrit en regard du dessin annexé, dont la figure unique représente en coupe longitudinale une tête de soudage au laser conforme à l'invention.

La tête de soudage au laser 1 représentée au dessin est destinée à réaliser une ou plusieurs soudures circulaires dans un tube de petit diamètre (non représenté), notamment pour fixer une manchette de réparation dans un tube de générateur de vapeur d'un réacteur nucléaire à eau pressurisée. La tête 1, d'axe général X-X supposé vertical, comprend une enveloppe principale 2 de forme générale tubulaire, un système optique 3 monté dans cette enveloppe, et un nez supérieur 4. Le diamètre extérieur de l'enveloppe principale est légèrement inférieur au diamètre intérieur du tube précité, et cette enveloppe est munie de moyens, classiques et non représentés, de positionnement axial et de centrage dans ce tube.

Le système optique 3 comprend, d'amont vers l'aval, une fibre optique 5 qui se termine sur l'axe X-X, une lentille collimatrice 6, une lentille focalisatrice 7 et un miroir de renvoi 8 incliné à 45°. Ce miroir constitue une face d'un porte-miroir 8A qui est fixé par une vis 9 à une cloison support transversale 10 de l'enveloppe 2 percée d'ouvertures 11, tandis que les lentilles 6 et 7 sont positionnées par des manchons entretoises 12 et par une bague annulaire de serrage 13.

Le nez 4 comprend une pièce de refroidissement 14 et une ogive 15.

La pièce 14 est un bloc massif en cuivre, de forme générale cylindrique, dont la partie inférieure, de diamètre agrandi, est filetée et vissée dans un taraudage 16 prévu à l'extrémité supérieure, ouverte, de l'enveloppe 2. Ce bloc est percé d'un certain nombre de conduits longitudinaux 17 débouchant sur ses deux faces d'extrémité.

L'ogive 15 coiffe le bloc 14, et son extrémité inférieure, filetée, se visse également dans le taraudage 16, jusqu'au contact de la partie inférieure du bloc 14. Cette ogive est pourvue à son extrémité d'un trou d'évent 18.

Lorsque les deux éléments 14 et 15 du nez 4 sont en place, l'ogive 15 constitue la partie d'extrémité de l'enveloppe de la tête 1, et le bloc 14 est espacé de la cloison 10 vers l'aval et n'est en contact thermique qu'avec les pièces 2 et 15 de l'enveloppe de la tête.

En fonctionnement, la tête 1 étant positionnée de la manière appropriée, du gaz de protection de soudage est envoyé dans cette tête, passe à travers des échancrures prévues sur le bord des lentilles 6 et 7, et sort de la tête vers le point de travail 19, à travers une fenêtre 20 de l'enveloppe 2 située en regard du miroir. Une partie de ce gaz traverse toutefois les ouvertures 11 de la cloison 10 puis les passages 17 de la pièce 16, et sorte de la tête par l'évent 18.

Puis, le courant de gaz étant maintenu, le faisceau laser de soudage est transporté par la fibre optique 5, collimaté par la lentille 6, et focalisé par la lentille 7 sur le point 19 après réflexion sur le miroir 8.

Pendant toute l'opération de soudage, qui est destinée à réaliser une soudure circulaire et s'effectue en faisant tourner la tête 1 sur un tour complet autour de son axe, la partie du gaz qui traverse les ouvertures 11 et les passages 17 ainsi que les transferts de chaleur par conduction entre l'enveloppe 2 et la pièce 16 provoquent l'échauffement prioritaire de cette pièce 16, massive et à haute conductibilité thermique, ce qui limite l'échauffement du reste de la tête et notamment du miroir 8, du porte-miroir 8A et de la cloison support 10.

Entre deux opérations de soudage, on maintient le courant de gaz, ce qui assure un refroidissement accéléré de la pièce 16 et également du reste de la tête 1.

Ainsi, l'échauffement des parties de la tête qui sont importantes pour la qualité de la soudure est réduit pendant le soudage, et un refroidissement rapide est obtenu entre les opérations de soudage. Les déformations thermiques de la tête 1 sont donc réduites à un minimum.

**Revendications**

1. Procédé de travail au laser, du type dans lequel un faisceau laser est transporté à l'intérieur d'une tête de travail (1), renvoyé par un miroir incliné (8) monté dans celle-ci et focalisé sur un point de travail (19), et un gaz est envoyé dans la région de la tête de travail qui contient le miroir, caractérisé en ce qu'on fait passer une partie du gaz à travers des passages (17) ménagés dans une pièce massive (16) thermiquement conductrice montée au-delà du miroir, en contact thermique avec uniquement l'enveloppe (2, 15) de la tête de travail et espacée du support (8A) du miroir.

2. Procédé suivant la revendication 1, caractérisé en ce qu'entre deux phases de travail, on continue à faire passer du gaz à travers les passages (17) de la pièce massive (16).

3. Tête de travail au laser, du type comprenant une enveloppe (2, 15) dans laquelle est monté un système optique (3) de transport, de focalisation et de renvoi d'un faisceau laser comportant un miroir incliné (8), caractérisée en ce qu'elle comprend une pièce massive (16) thermiquement conductrice montée dans l'enveloppe (2, 15) au-delà du miroir (8), en contact thermique avec uniquement cette enveloppe et espacée du support (8A) du miroir, cette pièce étant pourvue de passages (17) qui communiquent avec l'espace de l'enveloppe (2, 15) situé en-deçà du miroir.

4. Tête de travail suivant la revendication 3, caractérisée en ce que lesdits passages (17) sont ménagés longitudinalement dans la pièce massive (16).

5. Tête de travail suivant la revendication 3 ou 4, caractérisée en ce que la pièce massive (16) est en un matériau meilleur conducteur thermique que celui de l'enveloppe (2, 15), notamment en cuivre.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-3 637 568 (TRUMPF GMBH & CO) <br> * le document en entier * <br> --- | 1-5 | B23K26/14 |
| A | EP-A-0 300 458 (MITSUBISHI JUKOGYO KABUSHIKI KAISHA) <br> * le document en entier * <br> --- | 1-3 | |
| A | EP-A-0 294 324 (C.A. WEIDMÜLLER GMBH & CO.) <br> * le document en entier * <br><br> ----- | 1 | |

**DOMAINES TECHNIQUES RECHERCHES (Int. Cl.5 )**

B23K

Le présent rapport a été établi pour toutes les revendications

| Lieu de la recherche | Date d'achèvement de la recherche | Examinateur |
|---|---|---|
| LA HAYE | 22 AVRIL 1992 | ARAN D.D. |

EPO FORM 1503 03.82 (P0402)